(19) Europäisches Patentamt
European Patent Office
Office européen des brevets

(11) Veröffentlichungsnummer: **0 685 532 A1**

# (12) EUROPÄISCHE PATENTANMELDUNG

(21) Anmeldenummer: **95107602.5**

(22) Anmeldetag: **18.05.95**

(51) Int. Cl.$^6$: **C09B 62/01**, D06P 1/38

(30) Priorität: **31.05.94 DE 4418992**

(43) Veröffentlichungstag der Anmeldung: **06.12.95 Patentblatt 95/49**

(84) Benannte Vertragsstaaten: **CH DE FR GB LI**

(71) Anmelder: **BAYER AG**
**D-51368 Leverkusen (DE)**

(72) Erfinder: **Jäger, Horst, Dr.**
**Sürder-Strasse 28**
**D-51375 Leverkusen (DE)**
Erfinder: **Wolff, Joachim, Dr.**
**Schlinghofener Strasse 38**
**D-51519 Odenthal (DE)**

## (54) Neue Reaktivfarbstoffe, deren Herstellung und Verwendung.

(57) Neue Reaktivfarbstoffe der allgemeinen Formel

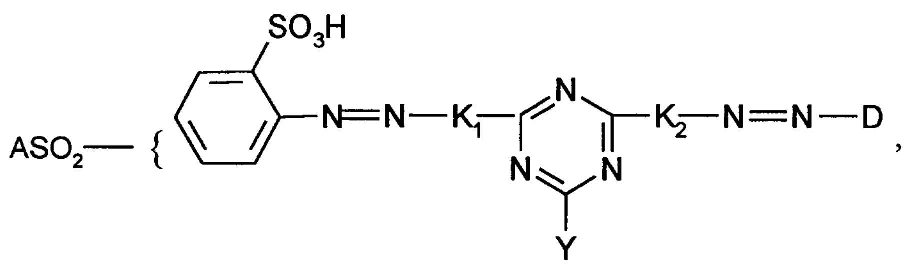

worin

A für $CH=CH_2$ oder $CH_2$-$CH_2Z$ steht, wobei Z einen unter Färbebedingungen abspaltbaren Substituenten bedeutet,

und worin die übrigen Gruppen die in der Beschreibung angegebene Bedeutung haben, zeigen verbesserte anwendungstechnische Eigenschaften.

EP 0 685 532 A1

Die Erfindung betrifft neue Reaktivfarbstoffe, deren Herstellung und Verwendung.

Disazofarbstoffe mit zwei Reaktivgruppen sind bereits bekannt aus DE-A-27 48 965 (= US-A-4 485 041), DE-A-27 48 966 (= GB-A-2 007 698), DE-A-36 29 574 (= US-A-4 806 127) und DE-A-41 13 838 (= US-A-5 200 511).

Die bekannten Farbstoffe weisen aber noch anwendungstechnische Mängel auf. Aufgabe der Erfindung war es, verbesserte Farbstoffe bereitzustellen.

Die Erfindung betrifft neue Reaktivfarbstoffe der allgemeinen Formel (I)

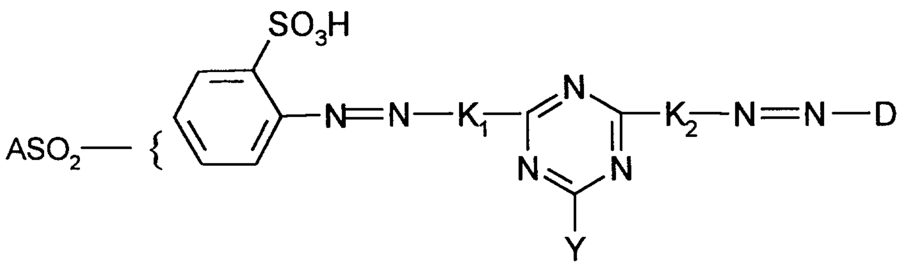

(I),

worin

$K_1$ und $K_2$ gleich oder verschieden sind und unabhängig voneinander den Rest einer Kupplungskomponente, insbesondere aus der Reihe der Aminohydroxynaphthalinsulfonsäuren bedeuten,

D den Rest einer von

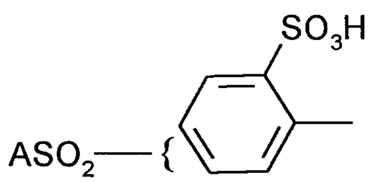

verschiedenen Diazokomponente darstellt,

A für $CH=CH_2$ oder $CH_2$-$CH_2Z$ steht, wobei Z einen unter Färbebedingungen abspaltbaren Substiuenten bedeutet, insbesondere $-OPO_3H_2$, $-OCOCH_3$, -Cl, $-OSO_2CH_3$, $-S_2O_3H$, -OH, vor allem $-OSO_3H$

Y für Halogen, wie Fluor, Chlor oder einen gegebenenfalls substituierten Pyridiniumrest steht

und die Gruppe $SO_2$-A in 4- oder 5-Stellung gebunden ist.

Der Rest D kann eine weitere Reaktivgruppe enthalten, diese kann entweder substitutiv oder additiv reagieren. Dementsprechend existieren drei verschiedene Diazokomponenten $H_2N$-D (2) die durch die allgemeinen Formeln (3), (4) und (5) wiedergegeben werden:

$H_2N$-$D_1$ (3)

$H_2N$-$D_2$-$B_1$-$SO_2A$ (4)

$H_2N$-$D_3$-$B_2$-X (5),

worin

$D_1$ einen reaktivgruppenfreien Phenyl- oder Naphthylrest bedeutet, der gegebenenfalls substituiert ist,

$D_2$ und $D_3$ für einen gegebenenfalls substituierten Phenylen- oder Naphthylenrest stehen,

$B_1$ für eine direkte Bindung oder ein zweiwertiges Brückenglied steht,

$B_2$ für ein zweiwertiges Brückenglied steht und

A die angegebene Bedeutung hat und

X ein faserreaktiver Rest ist.

Beispiele für Substituenten der Reste $D_1$, $D_2$ und $D_3$ sind Methoxy, Ethoxy, Methyl, Ethyl, Chlor, Carboxy und die Sulfonsäuregruppe. Ein bevorzugter Substituent ist die Sulfonsäuregruppe.

Geeignete faserreaktive Reste X, d.h. solche, die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido ($N_3$), Rhodanido, Thiolether, Oxiether, Sulfinsäure und Sulfonsäure.

Im einzelnen sind beispielsweise zu nennen:

2,4-Difluortriazinyl-6, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_2$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl-bzw. N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

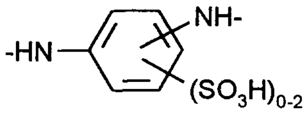 , 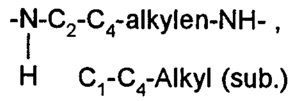

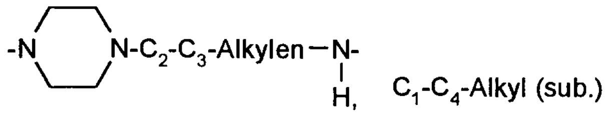

oder im Falle der Sulfatoethylsulfonyl- bzw. Vinylsulfonylgruppe über ein Brückenglied

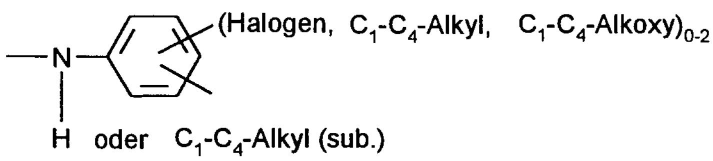 ,

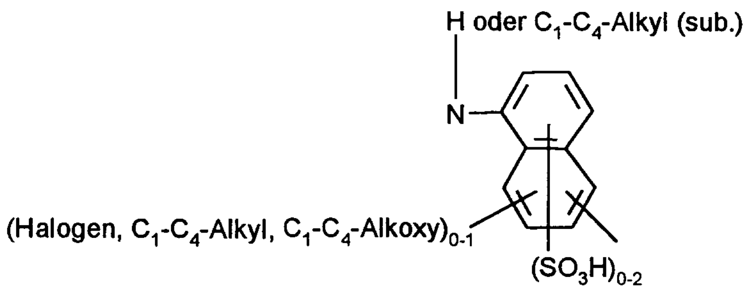 .

Spezielle Beispiele sind:

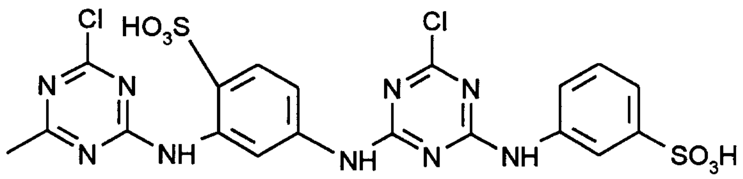

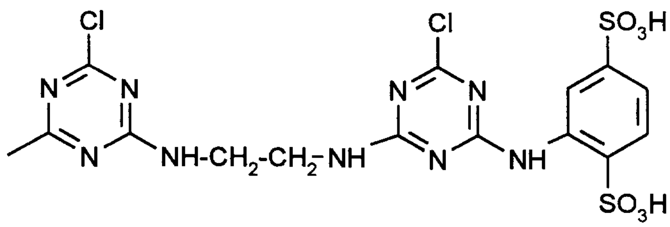

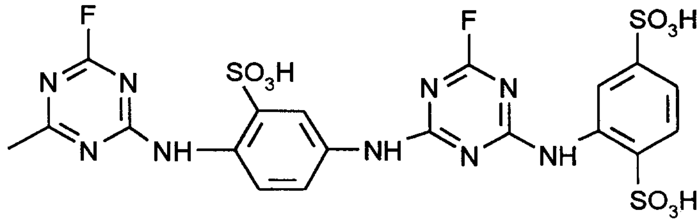

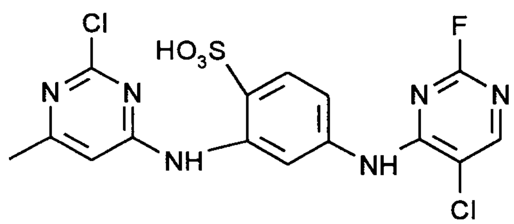

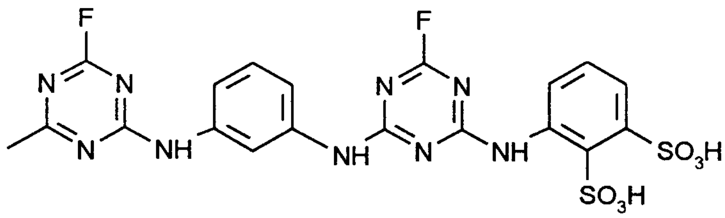

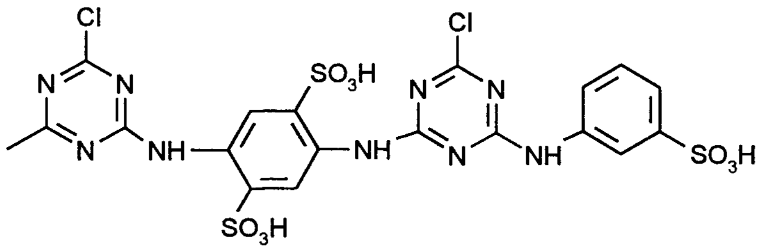

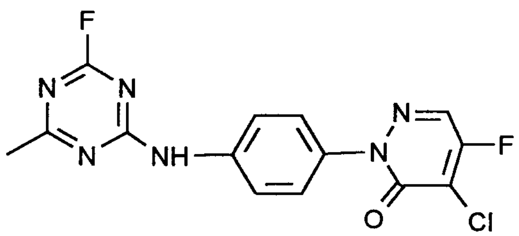

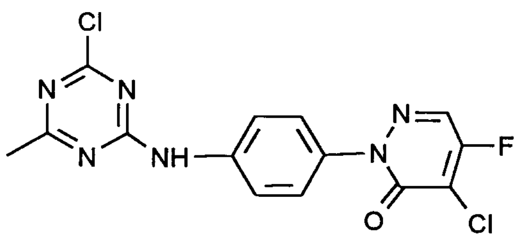

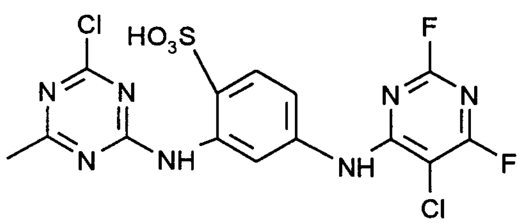

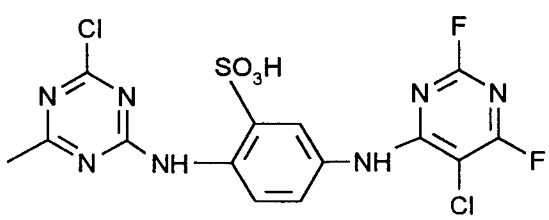

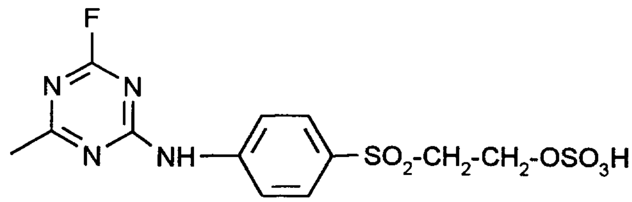

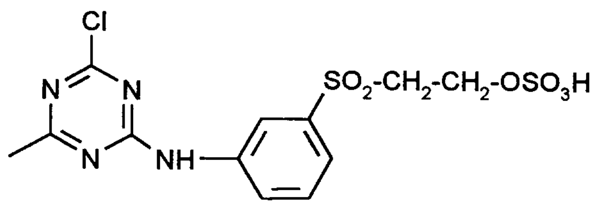

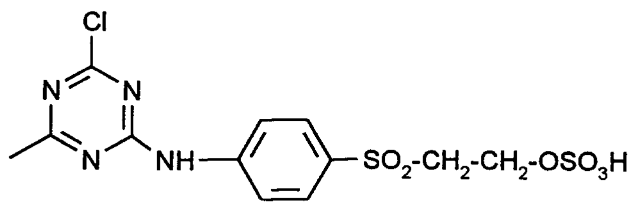

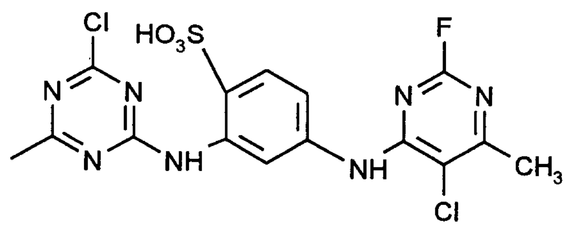

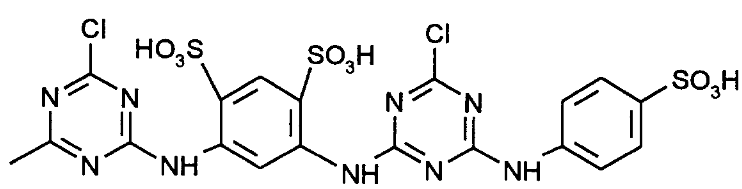

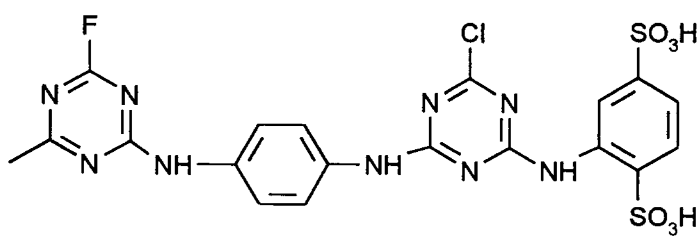

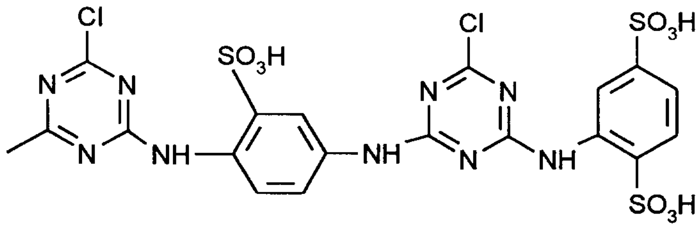

Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, $\beta$-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 6-Fluor-5-chlor-4-pyrimidinyl, 6-Fluor-4-pyrimidinyl, 5-Chlor-6-Fluor-2-Dichlorfluormethyl-4-pyrimidinyl, 2-Fluor-5-chlorpyrimidin-4-yl, 2-Methyl-4-fluor-5-methylsulfonylpyrimidinyl-6, 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6-; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder

-6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfony-, 2-Chlor-4-methylthiazol-(1,3)-5-carbonyl- oder -4- oder -5-sulfonyl-, N-Oxid des 4-Chlor- oder 4-Nitrochinolin-5-carbonyls.

Als Beispiele für zweiwertige Brückenglieder $B_1$ seien folgende genannt:

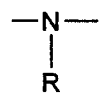

(R = Wasserstoff, Methyl oder Ethyl)

$-CH_2-$,

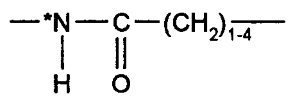
,

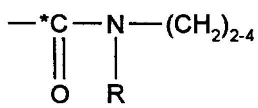
,

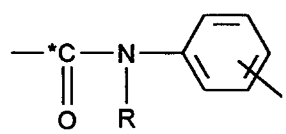
,

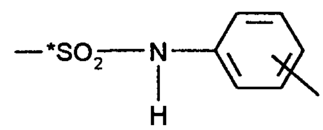

wobei

die mit Stern bezeichnete Bindung an den Rest $D_2$ geknüpft ist.

Insbesondere steht $B_1$ für eine direkte Bindung.

Beispiele für zweiwertige Brückenglieder $B_2$ sind:

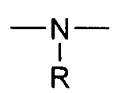

(wobei R die angegebene Bedeutung hat),

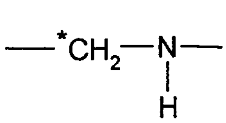
,

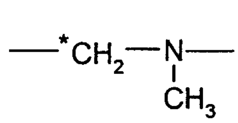
,

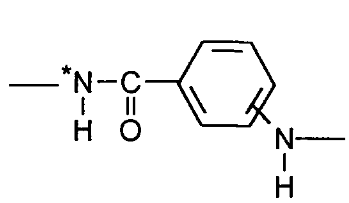
,

wobei

die mit Stern gekennzeichnete Bindung an den Rest $D_3$ geknüpft ist.

Insbesondere steht $B_2$ für

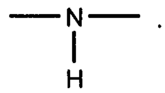

Bevorzugte Substituenten des Pyridiniumrestes Y sind: Methyl, Ethyl, Carboxy, Carbonamid, Sulfonamid und die Sulfonsäuregruppe. Eine bevorzugte Bedeutung von Y ist Chlor. Die Stellung des Restes A-$SO_2$ p-ständig zur Azobrücke ist bevorzugt.

Die Reste $K_1$ und $K_2$ leiten sich vorzugsweise von einer Kupplungskomponente aus der Aminonaphthalinsulfonsäurereihe ab. Geeignete Kupplungskomponenten entsprechen der Formel (6)

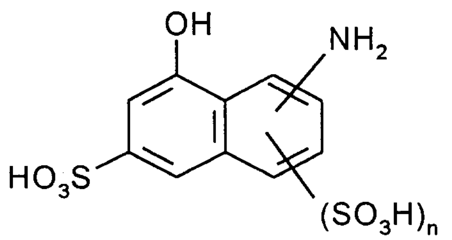

(6)

wobei

n 0 oder 1 bedeutet.

Beispielhaft sind folgende Komponenten genannt:

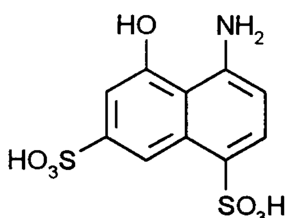

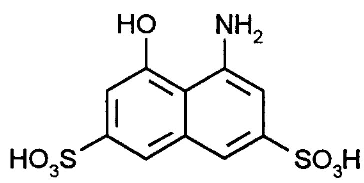

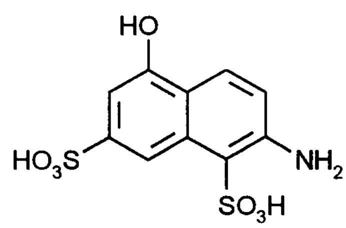

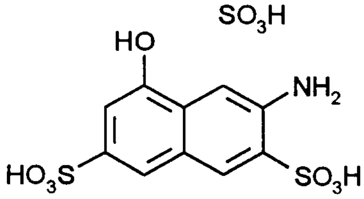

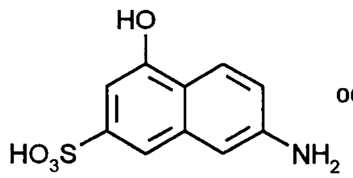

oder

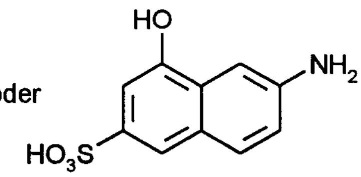

Im Rahmen der Formel (1) sind Farbstoffe bevorzugt, die folgende Merkmale aufweisen:

Der Rest $SO_2$-A ist p-ständig zur Azobrücke, A bedeutet $CH_2CH_2OSO_3H$ oder $CH=CH_2$, $K_1$ und $K_2$ sind gleich und stehen für

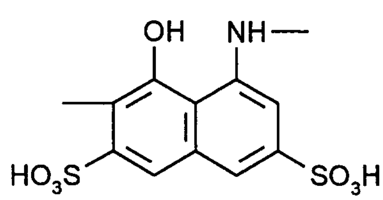

und Y steht für Chlor.

Weiterhin bevorzugt sind Farbstoffe der Formel (1), die die genannten Merkmale aufweisen und in denen der Rest D in der Bedeutung von $-D_1$ für folgende Strukturen steht:

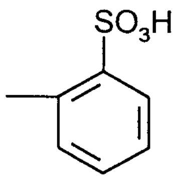 , 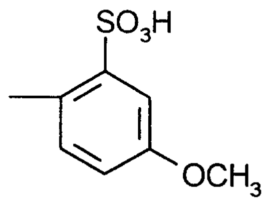 , 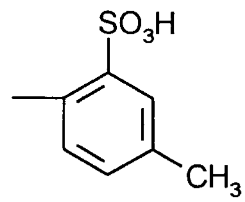 ,

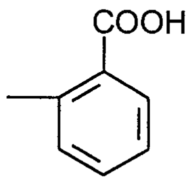 , 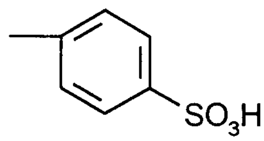 , 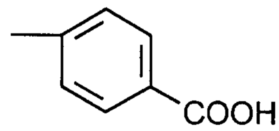 ,

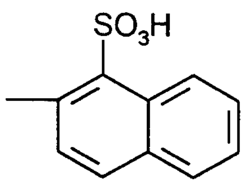 , 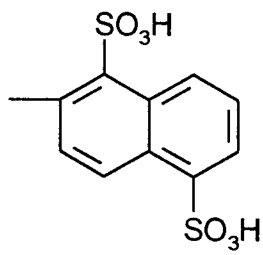 , 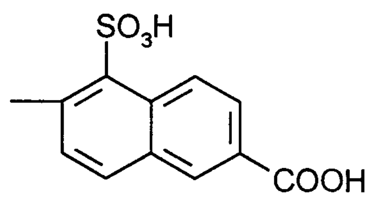 ,

und in denen der Rest D in der Bedeutung von $-D_2-B_1-SO_2A$ für folgende Reste steht:

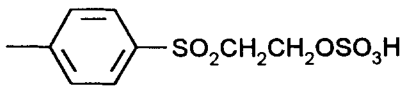

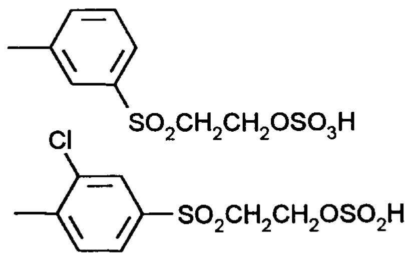

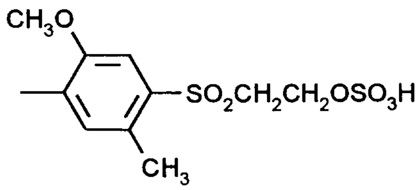

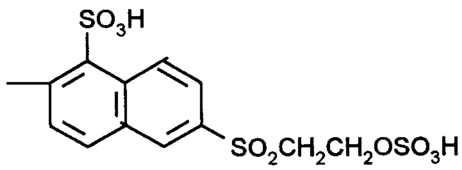

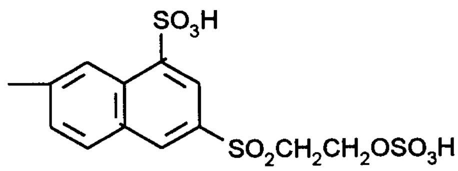

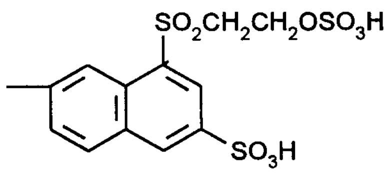

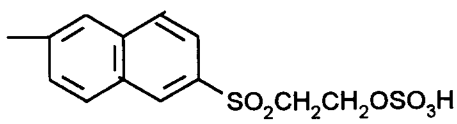

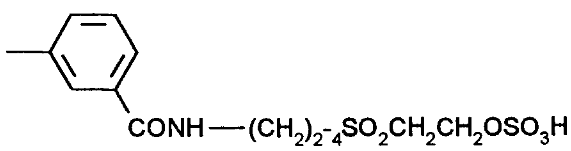

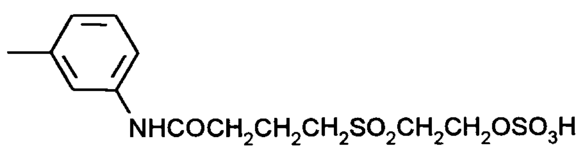

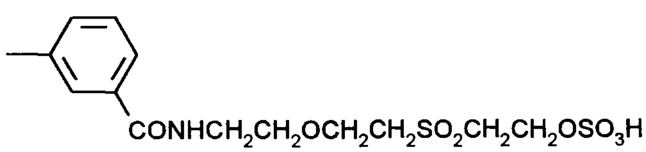

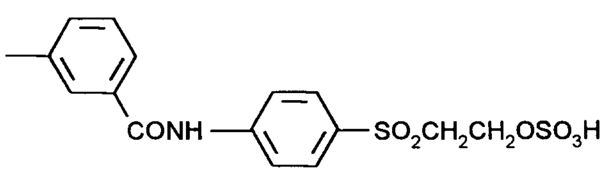

und in denen der Rest D in der Bedeutung von $-D_3-B_2-X$ für folgende Reste steht:

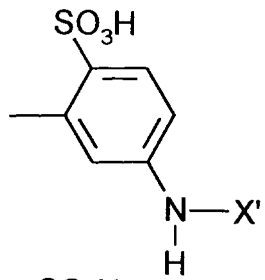 , 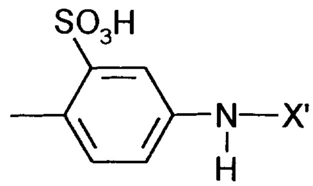 ,

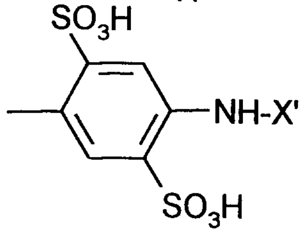 , 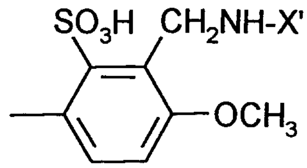 ,

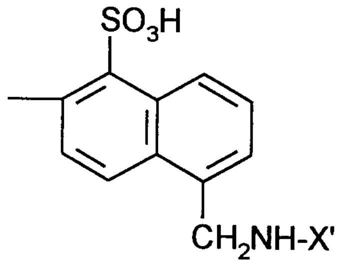

wobei

X' für folgende faserreaktive Reste steht:

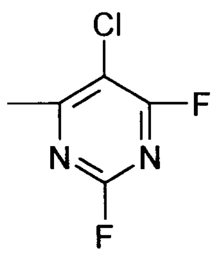 , 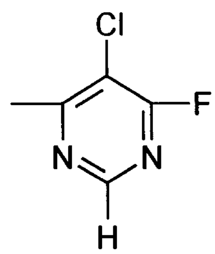 , 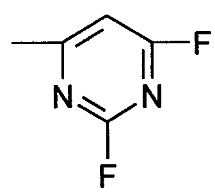 ,

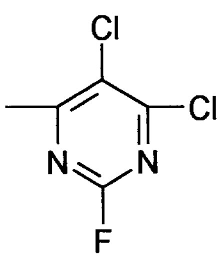 , 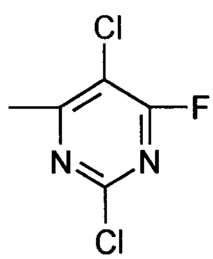 , 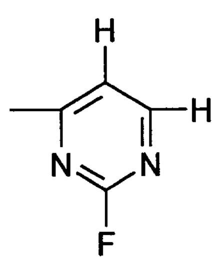 ,

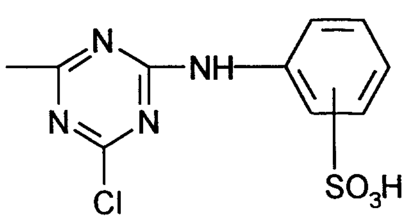 , 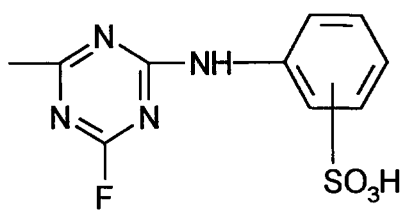

wobei
die Sulfogruppe in o-, m- oder p-Stellung zur NH-Gruppe steht,

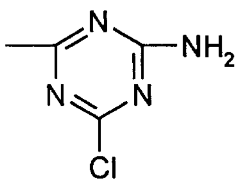
,
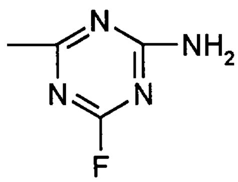
,
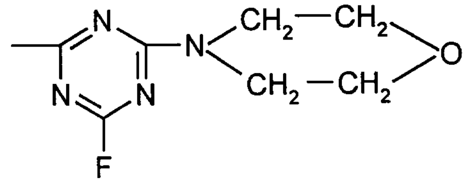

Die Herstellung der Farbstoffe (1) erfolgt beispielsweise, indem man ein Amin der Formel:

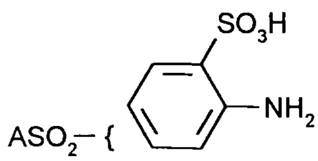
(7),

wobei
der Rest $SO_2A$ in 4- oder 5-Stellung steht,
in wäßrigem mineralsaurem Medium diazotiert und anschließend bei einem pH-Wert von 3 - 7 mit einem Naphthalintriazinderivat der Formel

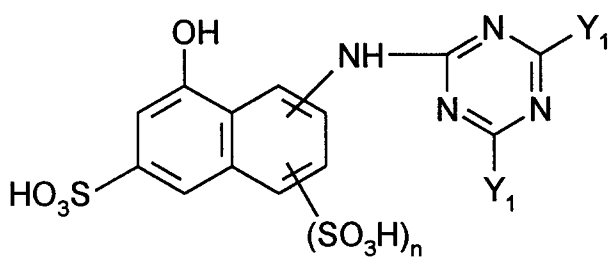
(8) ,

wobei
$Y_1$ für Chlor oder Fluor steht und n die angegebene Bedeutung hat,
kuppeln. Das erhaltene Zwischenprodukt der Formel

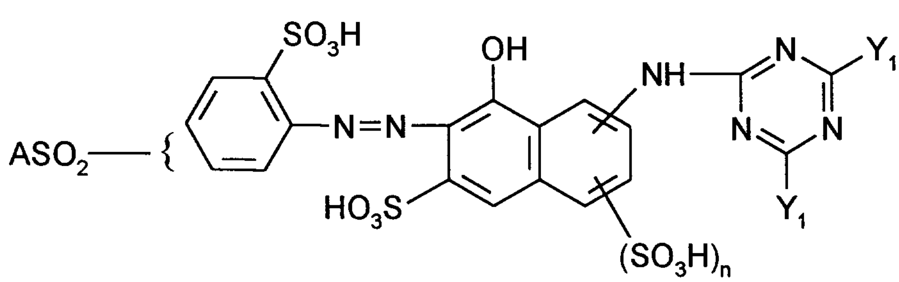
(9)

wird mit einer Aminonaphthalinsulfonsäure der Formel (6) bei einem pH-Wert von 3 bis 6 und einer Temperatur von 0 bis 40 °C zu einem Produkt der Formel

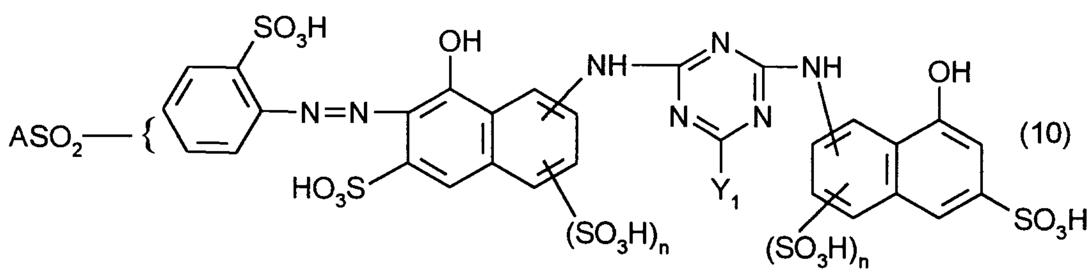

(10)

umgesetzt.

In der nächsten Stufe erfolgt dann die Kupplung des Produktes (10) mit einer Diazokomponente der Formel (2) zu einem Farbstoff der Formel

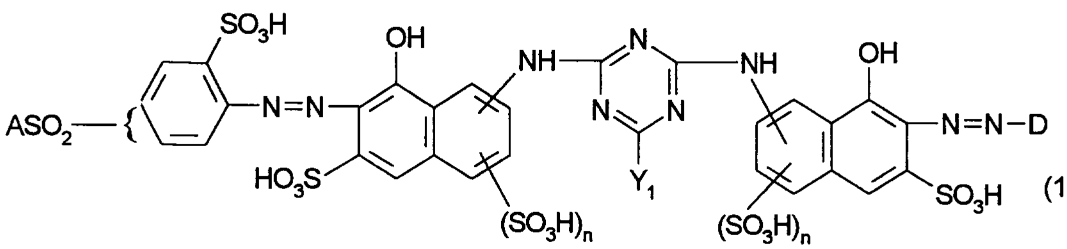

(11)

Die Synthese des Farbstoffs (1) ist auch in umgekehrter Reihenfolge möglich und vorteilhaft, wenn die Elektrophilie des Diazoniumsalzes (2) höher ist als die des Diazoniumsalzes (7).

Für den Fall, daß Y für eine gegebenenfalls substituierte Pyridiniumgruppe steht, kann man die Farbstoffe der Formel (11) mit einer Pyridinverbindung der Formel

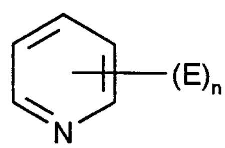

,

worin

E für Methyl, Ethyl, Carboxyl, Carbonamid, Sulfonsäure oder Sulfonamid und

m für 0 bis 3 für E gleich Methyl oder Ethyl und m für 0 bis 1 für E gleich Carboxyl, Carbonamid, Sulfonsäure oder Sulfonamid steht,

umsetzen.

Die Umwandlung der Halogensubstituenten Y, in einen Pyridiniumsubstituenten wird durch Erhitzen in wäßrigem Medium auf 40 - 90°C und im pH-Bereich von 6 bis 9 insbesondere 7 bis 8 ausgeführt. Bevorzugt ist dieser Austausch bei Farbsoffen der Formel (11), in denen D für den Rest einer Diazokomponente $D_1$ oder $D_2$ steht. Für D gleich $D_3$ ist es vorteilhaft diesen Austausch auf der Stufe des Zwischenproduktes (10) auszuführen.

Die Isolierung der nach den vorstehenden beschriebenen Verfahren erhaltenen Reaktivfarbstoffe erfolgt in üblicher Weise durch Aussalzen, beispielsweise mit Natrium- oder Käliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststofformierungen wie auch als konzentrierte Lösungen eingesetzt werden.

In einer bevorzugten Ausführungsform werden die Farbstoffe als Granulate verwendet. Die Granulate der Farbstoffe können in folgenden Schritten erhalten werden:

Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die Azoverbindungen (1) besitzen wertvolle Farbstoffeigenschaften. Infolge der faserreaktiven Gruppe $SO_2A$ und des Halogentriazinyl-Restes weisen sie faserreaktive Eigenschaften auf.

Die Reaktivfarbstoffe der Formel (I) ergeben Färbungen mit guten Naß- und Lichtechtheiten. Besonders hervorzuheben ist es, daß die Farbstoffe eine gute Löslichkeit und Elektrolytlöslichkeit bei guten Ausziehungseigenschaften und hoher Farbstoff-Fixierung aufweisen, und daß sich die nicht fixierten Anteile leicht entfernen lassen.

Die neuen Farbstoffe der Formel (I) eignen sich zum Färben und Bedrucken von Hydroxyl- oder Amidgruppen enthaltenden Materialien, wie Textilfaser, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden freien Säuren. Die Farbstoffe wurden im allgemeinen in Form von Alkalisalze, insbesondere der Na-Salze isoliert und zum Färben eingesetzt.

**Beispiel 1**

**a) Acylierung der H-Säure mt Cyanurchlorid**

Eine neutrale Lösung von 31,8 g 1-Amino-8-hydroxynaphthalin-3,6-disulfonsäure (H-Säure) in 200 ml Wasser wird zu einer Anschlämmung von 18,5 g Cyanurchlorid und 0,1 g eines Netzmittels in 200 ml Eiswasser getropft. Man rührt ca. 2 h bei 10 - 12 °C, bis sich keine H-Säure mehr nachweisen läßt.

**b)**

28,1 g 4-($\beta$-Sulfatoethylsulfonyl)-anilin werden in 400 ml Eiswasser bei pH 5 - 6 gelöst. Man gibt dann 28 ml 30%ige Salzsäure zu und versetzt dann tropfenweise mit 70 ml 10%iger Natriumnitritlösung. Man rührt 1 h nach und entfernt den Überschuß an Nitrit mit Amidosulfonsäure.

**c)**

Die nach a) erhaltene Lösung wird mit der Suspension der nach b) erhaltenen Diazoverbindung versetzt. Durch Einstreuen von Natriumhydrogencarbonat wird ein pH von 3 - 5 eingestellt und solange gerührt bis sich keine Diazoverbindung mehr nachweisen läßt.

**d)**

Der nach c) erhaltene Azofarbstoff wird mit 30,2 g H-Säure versetzt und die Temperatur auf 25 °C

gebracht, wobei ein pH von 4,5 durch Einstreuen von Bicarbonat aufrechterhalten wird. Nach mehrstündigem Rühren ist die Kondensation zu Ende. In wäßriger Lösung liegt dann folgender Farbstoff vor:

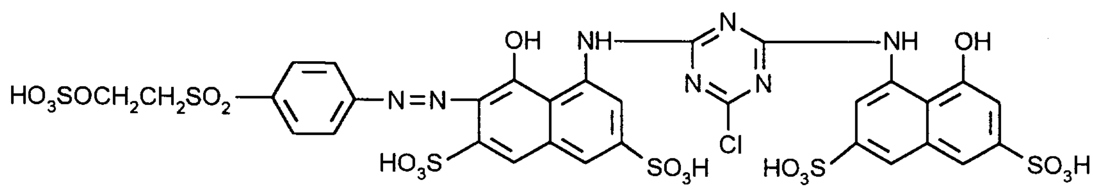

**e)**

34,3 g 4-(β-Sulfatoethylsulfonyl)anilin-2-sulfonsäure werden in 500 ml Eiswasser verrührt und mit 26 ml 30%iger Salzsäure versetzt. Man gibt dann tropfenweise 67 ml 10%ige Natriumnitritlösung zu und rührt solange nach bis nur noch ein geringer Nitritüberschuß zu erkennen ist. Dieser wird dann mit Amidosulfonsäure zerstört.

**f)**

Die nach e) erhaltene Diazoverbindung wird mit der Lösung d) vereinigt und die Kupplung bei pH 6,0 - 6,5 und 15 - 20 °C durchgeführt.

Zur Isolierung wird die Lösung des Farbstoffes mit 20 Vol.% Kaliumchlorid versetzt. Der resultierende Niederschlag wird abgesaugt, bei 70 °C im Umlufttrockenschrank getrocknet und gemahlen. Man erhält ein leicht in Wasser lösliches rotes Pulver. Der Farbstoff entspricht folgender Formel:

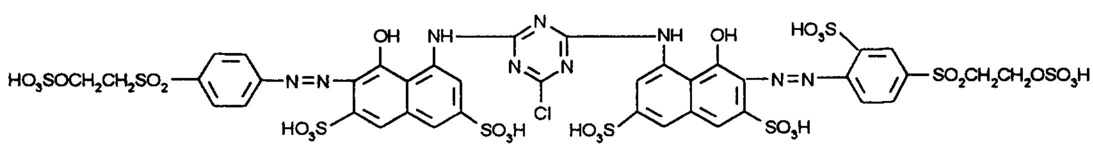

$\lambda_{max}$ = 520 nm

Nach einem der für Reaktivfarbstoffe üblichen Färbeverfahren erhält man damit auf Baumwolle klare gelbstichige Rotfärbungen. Verfährt man nach den Angaben dieses Beispiels, verwendet aber in Stufe a) die gleiche Menge 1-Amino-8-hydroxynaphthalin-4,6-disulfonsäure (K-Säure) anstelle H-Säure (Beispiel 2) oder in Stufe d) die gleiche Menge K-Säure anstelle H-Säure (Beispiel 3) oder in Stufe a) und d) jeweils die gleiche Menge K-Säure anstelle H-Säure (Beispiel 4), so resultieren gleichfalls wertvolle Baumwollreaktivfarbstoffe, die Baumwolle in klaren Rottönen färben, die etwas gelber sind als die des Beispiels 1.

## Beispiel 5

**a)**

31,8 g H-Säure werden nach den Angaben von Beispiel 1 a) mit Cyanurchlorid umgesetzt.

**b)**

36,1 g 4-(β-Sulfatoethylsulfonylanilin-2-sulfonsäure werden nach den Angaben von Beispiel 1 e) diazotiert, wobei man 70 ml 10 Vol.-%ige Natriumnitritlösung und 28 ml 30 %ige Salzsäure verwendet.

**c)**

Die beiden Lösungen a) und b) werden vereinigt und die Kupplung im pH-Bereich von 4-6 ausgeführt, den man durch Einstreuen von Natriumhydrogencarbonat einhält. Die Kupplung ist nach zwei- bis dreistündigem Rühren bei 15 - 20 °C beendet.

**d)**

Die weitere Umsetzung mit 30,2 g H-Säure erfolgt nach den Angaben von Beispiel 1 d). In wäßriger Lösung liegt dann folgenden Farbstoff vor:

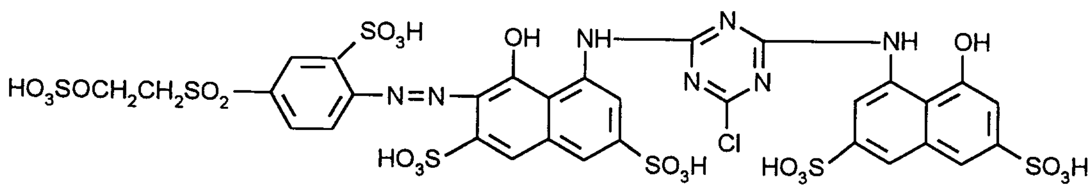

**e)**

26,7 g 4-(β-Sulfatoethylsulfonyl)anilin werden nach den Angaben von Beispiel 1 b) mit 27 ml 30 %iger Salzsäure und 67 ml 10 Vol.-%iger Natriumnitritlösung diazotiert.

**f)**

Die Kupplung zum Diazofarbstoff und die Isolierung erfolgt nach den Angaben von Beispiel 1 f).

Der resultierende Farbstoff ist identisch mit dem nach Beispiel 1 erhaltenem Produkt.

Verfährt man nach den Angaben dieses Beispiels, verwendet jedoch anstelle der in Stufe e eingesetzten Diazokomponente eine äquivalente Menge der nachfolgend aufgeführten Diazokomponenten, so erhält man gleichfalls wertvolle Farbstoffe, die Baumwolle mit dem in der letzten Spalte genannten Farbton färben.

Tabelle 1

| Beispiel | Diazokomponente für Stufe e | Farbton |
|---|---|---|
| 6 | 4-(β-Thiosulfatoethylsulfonyl)anilin | gelbstichig rot |
| 7 | 4-Vinylsulfonylanilin | gelbstichig rot |
| 8 | 4-(β-Phosphatoethylsulfonyl)anilin | gelbstichig rot |
| 9 | 3-(β-Thiosulfatoethylsulfonyl)anilin | gelbstichig rot |
| 10 | 5-(β-Thiosulfatoethylsulfonyl)-2-methoxy-anilin | rot |
| 11 | 4-(β-Sulfatoethylsulfonyl)-2-methoxy-5-methyl-anilin | rot |
| 12 | 4-(β-Sulfatoethylsulfonyl)-2,5-methoxy-anilin | rot |
| 13 | 3-(β-Sulfatoethylsulfonyl)-4-methoxy-anilin | rot |
| 14 | 4-Vinylsulfonyl-2,5-dimethoxy-anilin | rot |
| 15 | 5-(β-Sulfatoethylsulfonyl)-2-chlor-anilin | gelbstichig rot |
| 16 | 3-(β-Sulfatoethylsulfonyl)-4-chlor-anilin | gelbstichig rot |
| 17 | 3-(3-oder4-Aminobenzoylamino)-phenyl)-β-sulfatoethylsulfon | gelbstichig rot |
| 18 | 3-(γ-(β-Sulfatoethylsulfonyl)-propionylamino)-anilin | gelbstichig rot |
| 19 | 3-Amino-benzoesäure-N-(γ-(β-Sulfatoethylsulfonyl)-propylamid | gelbstichig rot |
| 20 | 3-Amino-benzoesäure-N-(β-(β-Sulfatoethylsulfonyl)-ethyl)-amid | rot |
| 21 | 3-Amino-benzoesäure-N-methyl-(β-(β-Sulfatoethylsulfonyl)-ethyl)-amid | rot |
| 22 | 3-Amino-benzoesäure-N-phenyl-(β-(β-Sulfatoethylsulfonyl)-ethyl)-amid | rot |
| 23 | 6-β-Sulfatoethylsulfonyl-2-amino-naphthalin-1-sulfonsäure | rot |
| 24 | 8-β-Sulfatoethylsulfoyl-2-amino-naphthalin-6-sulfonsäure | rot |
| 25 | 6-β-Sulfatoethylsulfonyl-2-amino-naphthalin | rot |
| 26 | 8-β-Sulfatoethylsulfonyl-2-amino-naphthalin | rot |
| 27 | 6-β-Sulfatoethylsulfonyl-2-amino-naphthalin-8-sulfonsäure | rot |
| 28 | 4-Aminobenzyl-β-sulfatoethylsulfon | rot |
| 29 | 2-Amino-benzol-1-sulfonsäure | gelbstichig rot |
| 30 | 4-Amino-benzol-1-sulfonsäure | gelbstichig rot |
| 31 | 2-Amino-5-methoxy-benzol-1-sulfonsäure | rot |
| 32 | 2-Amino-5-methy-benzol-1-sulfonsäure | rot |
| 33 | 2-Amino-benzol-1,5-disulfonsäure | gelbstichig rot |
| 34 | 2-Amino-naphthalin-1-sulfonsäure | rot |
| 35 | 2-Amino-naphthalin-1,5-sulfonsäure | rot |
| 36 | 2-Amino-6-carboxy-naphthalin-1-sulfonsäure | rot |
| 37 | 2-Amino-naphthalin-1,6-disulfonsäure | rot |
| 38 | 2-Amino-5-(5'-chlor-6'-fluor-pyrimidinyl-4')-amino-benzyl-1-sulfonsäure | gelbstichig rot |
| 39 | 2-Amino-5-(5'-chlor-2',6'-difluor-pyrimidinyl-4')-amino-benzyl-1-sulfonsäure | gelbstichig rot |
| 40 | 2-Amino-5-(2'-fluor-4'-(2'-sulfophenylamino)-triazinyl-6')-benzol-1-sulfonsäure | gelbstichig rot |
| 41 | 2-Amino-5-(2'-amino-4'-chlor-triazinyl-6')-benzol-1-sulfonsäure | gelbstichig rot |
| 42 | 2-Amino-5-(2'-amino-4'-chlor-triazinyl-6')-benzol-1-sulfonsäure | gelbstichig rot |

Die $\lambda_{max}$-Werte für umgesetzte Farbstoffe betragen

| Beispiel | nm |
|---|---|
| 6 | 520 |
| 7 | 516 |
| 8 | 520 |
| 38 | 510 |
| 39 | 508 |
| 40 | 509 |
| 41 | 507 |
| 34 | 512 |

Weitere wertvolle Farbstoffe erhält man nach den Angaben von Beispiel 5, wenn man für Stufe 5a bzw. 5d die in Spalte 2 bzw. 3 aufgeführten Aminohydroxynaphthalin-sulfonsäure und für Stufe 5e die in Spalte 4 genannten Diazokomponenten verwendet. Diese Farbstoffe färben Baumwolle mit dem in Spalte 5 angegebenen Farbton.

**Tabelle 2**

| Beispiel | Kupplungskomponente für Stufe 5a | Kupplungskomponente für Stufe 5d | Diazokomponente für Stufe 5e | Farbton |
|---|---|---|---|---|
| 43 | 1-Amino-8-hydroxy-naphthalin-3,6-disulfonsäure | 2-Amino-5-hydroxy-naphthalin-7-sulfon-säure | 2-Amino-benzol-1-sulfonsäure | scharlach |
| 44 | 1-Amino-8-hydroxy-naphthalin-3,6-disulfonsäure | 2-Amino-5-hydroxy-naphthalin-7-sulfon-säure | 2-Amino-5-methoxy-benzol-1,4-disulfon-säure | gelbstichig rot |
| 45 | 1-Amino-8-hydroxy-naphthalin-3,6-disulfonsäure | 2-Amino-5-hydroxy-naphthalin-7-sulfon-säure | 2-Amino-naphthalin-1,5-disulfonsäure | scharlach |
| 46 | 1-Amino-8-hydroxy-naphthalin-3,6-disulfonsäure | 2-Amino-5-hydroxy-naphthalin-1,7-disulfonsäure | 4-(β-Sulfatoethyl-sulfonyl-anilin | scharlach |
| 47 | 1-Amino-8-hydroxy-naphthalin-3,6-disulfonsäure | | 4-(β-Sulfatoethyl-sulfonyl-anilin | scharlach |

## Beispiel 48

Der nach Beispiel 1 bzw. 5 erhaltene Farbstoff wird in 500 ml Wasser verrührt. Man setzt dann 14 g Pyridin-4-carbonsäure zu und erwärmt auf 85 °C, wobei der pH im Bereich von 7,0 - 7,5 liegt. Der Austausch ist nach vierstündigem Rühren beendet. Der Farbstoff wird mit 20 Vol.% Kaliumchlorid ausgesalzen, abgesaugt, getrocknet und gemahlen. Er löst sich leicht in Wasser mit roter Farbe und färbt

Baumwolle nach einem der für Reaktivfarbstoffe üblichen Verfahren in einem klaren gelbstichigen Rot. Der Farbstoff entspricht der Formel:

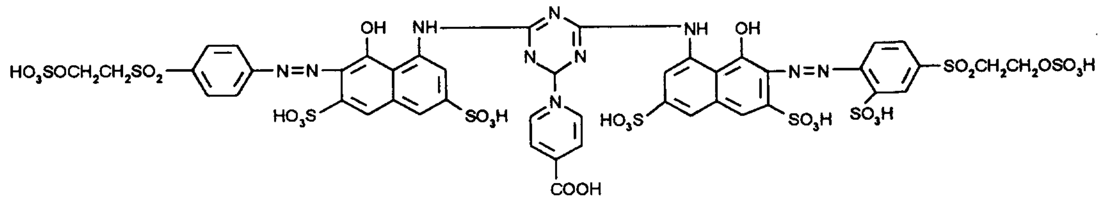

**Patentansprüche**

**1.** Reaktivfarbstoffe der allgemeinen Formel (I)

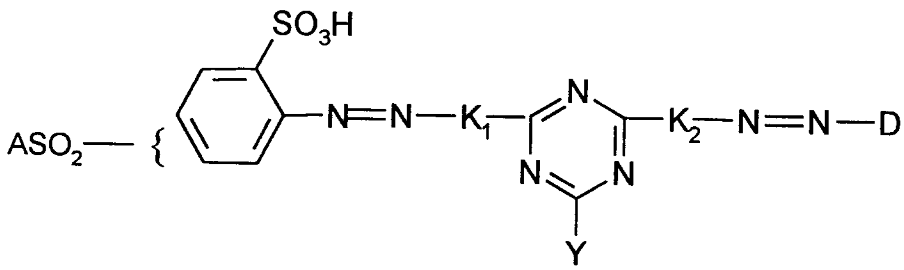

(I),

worin

- $K_1$ und $K_2$ gleich oder verschieden sind und unabhängig voneinander den Rest einer Kupplungskomponente bedeuten,
- D den Rest einer von

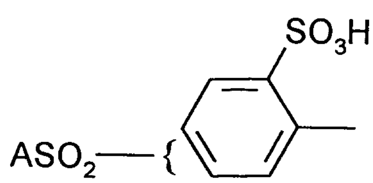

verschiedenen Diazokomponente darstellt,

- A für $CH=CH_2$ oder $CH_2$-$CH_2Z$ steht, wobei Z einen unter Färbebedingungen abspaltbaren Substituenten bedeutet,
- Y für Halogen, wie Fluor, Chlor oder einen gegebenenfalls substituierten Pyridiniumrest steht

und die Gruppe $SO_2$-A in 4- oder 5-Stellung gebunden ist.

**2.** Reaktivfarbstoff gemäß Anspruch 1, dadurch gekennzeichnet, daß die Diazokomponente $H_2N$-D (2) einer der Formeln (3), (4) und (5) entspricht

$H_2N$-$D_1$ (3)

$H_2N$-$D_2$-$B_1$-$SO_2A$ (4)

$H_2N$-$D_3$-$B_2$-X (5),

worin

- $D_1$ einen reaktivgruppenfreien Phenyl- oder Naphthylrest bedeutet, der gegebenenfalls substituiert ist,
- $D_2$ und $D_3$ für einen gegebenenfalls substituierten Phenylen- oder Naphthylenrest stehen,

$B_1$ für eine direkte Bindung oder ein zweiwertiges Brückenglied steht,
$B_2$ für ein zweiwertiges Brückenglied steht und
X faserreaktiver Rest.

3. Reaktivfarbstoff gemäß Anspruch 2, dadurch gekennzeichnet, daß

$B_1$ = 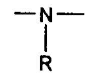

(R = Wasserstoff, Methyl oder Ethyl)
$-CH_2-$,

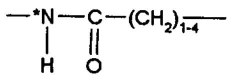 ,

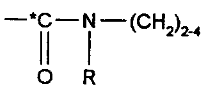 , 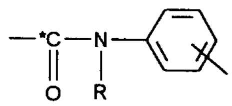 , oder 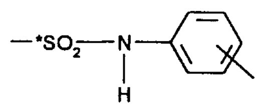

wobei die mit Stern bezeichnete Bindung an den Rest $D_2$ geknüpft ist, und

$B_2$ = 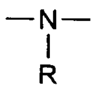 , 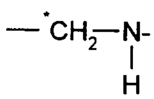 , 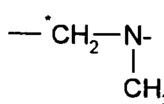 oder 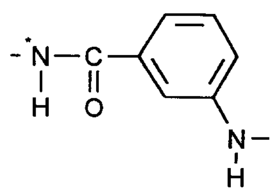 ,

wobei
R = Wasserstoff, Methyl oder Ethyl und
die mit Stern gekennzeichnete Bindung an den Rest $D_3$ geknüpft ist.

4. Reaktivfarbstoffe gemäß wenigstens einem der vorhergehenden Ansprüche, dadurch gekennzeichnet, daß
Z = $-OSO_3H$, $-OPO_3H_2$, $-OCOCH_3$, -Cl, $-OSO_2CH_3$, $-S_2O_3H$.

5. Reaktivfarbstoffe nach einem der vorhergehenden Ansprüche, dadurch gekennzeichnet, daß $K_1$ und $K_2$ unabhängig voneinander einen Aminohydroxynaphthalinsulfonsäurerest bedeuten.

6. Reaktivfarbstoff gemäß wenigstens einem der vorhergehenden Ansprüche, dadurch gekennzeichnet, daß $K_1$ und $K_2$ unabhängig voneinander einen Rest der Formel (6) bedeutet

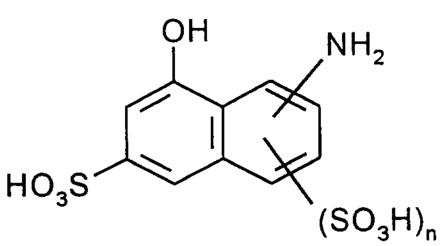

(6)

wobei

n = 0 oder 1.

**7.** Reaktivfarbstoff gemäß wenigstens einem der vorhergehenden Ansprüche, dadurch gekennzeichnet, daß der Rest D in der Bedeutung von -$D_1$ für folgende Strukturen steht

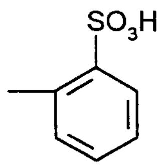 , 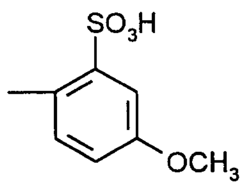 , 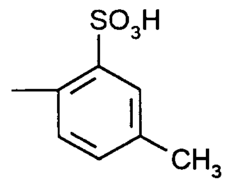 ,

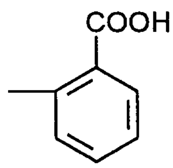 , 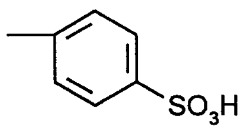 , 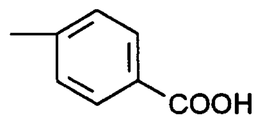 ,

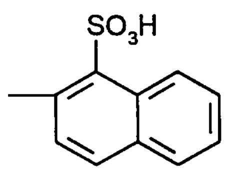 , 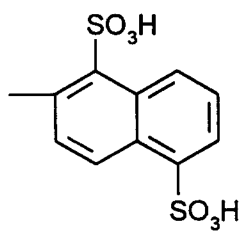 , 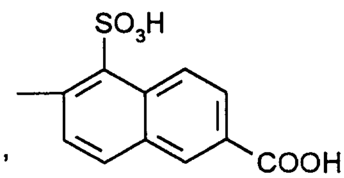 ,

und in denen der Rest D in der Bedeutung von -$D_2$-$B_1$-$SO_2A$ für folgende Reste steht:

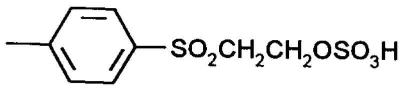

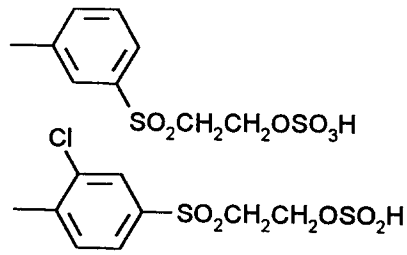

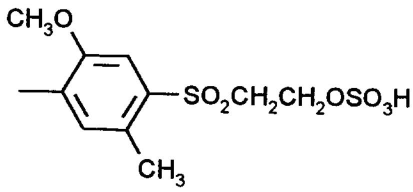

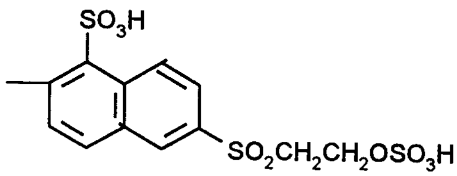

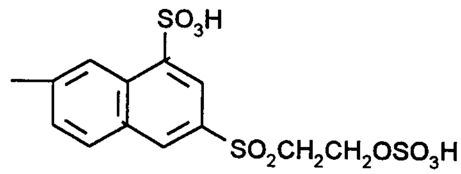

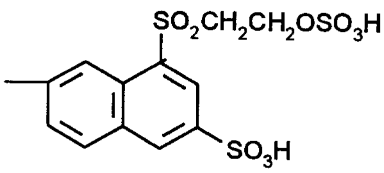

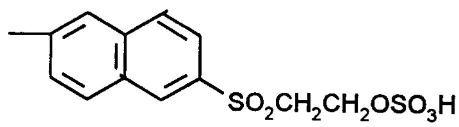

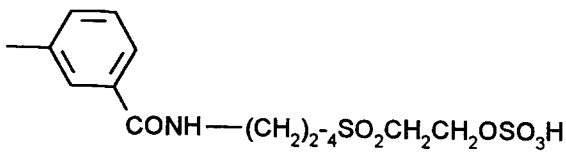

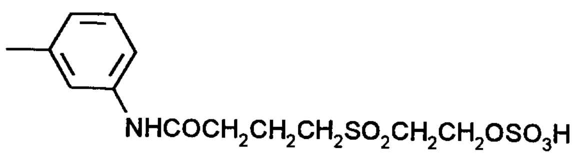

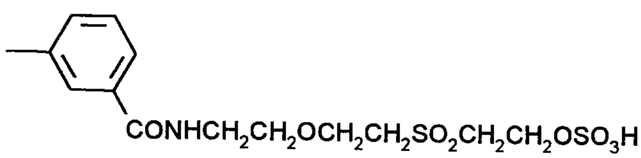

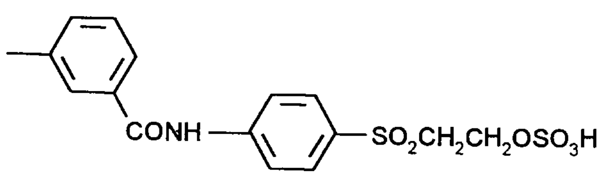

und in denen der Rest D in der Bedeutung von $-D_3-B_2-X$ für folgende Reste steht:

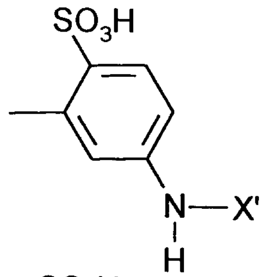 , 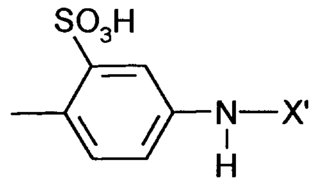 ,

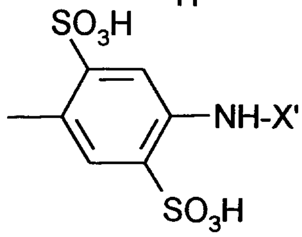 , 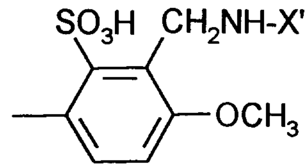 ,

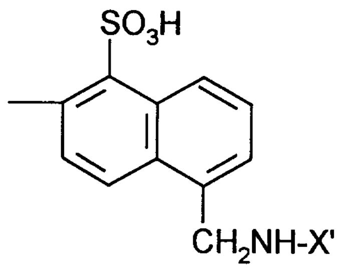

wobei

X' für folgende faserreaktive Reste steht:

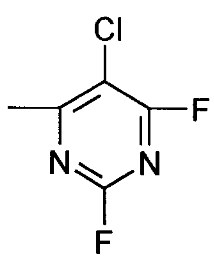 , 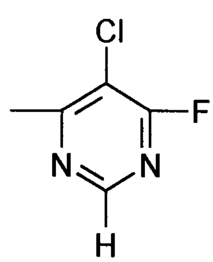 , 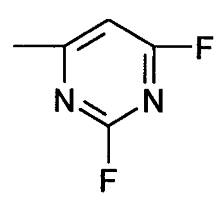 ,

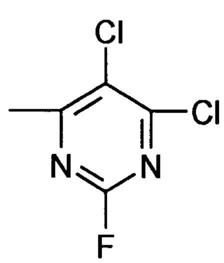 , 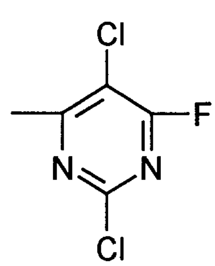 , 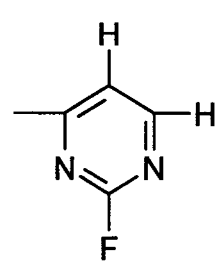 ,

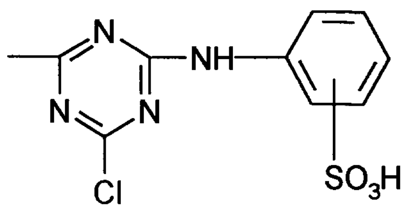 , 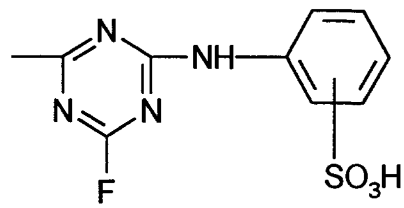

wobei die Sulfogruppe in o-, m- oder p-Stellung zur NH-Gruppe steht, sowie

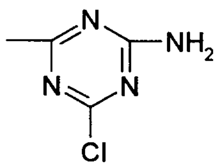 , 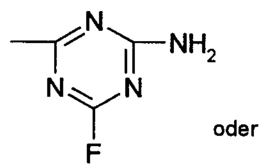 oder 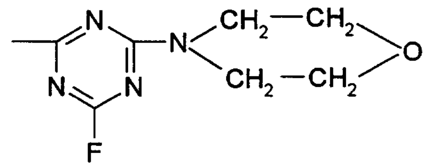

8. Reaktivfarbstoff gemäß wenigstens einem der vorhergehenden Ansprüche, dadurch gekennzeichnet, daß
der Rest $SO_2$-A p-ständig zur Azobrücke ist,
A $CH_2CH_2OSO_3H$ oder $CH=CH_2$ bedeutet,
$K_1$ und $K_2$

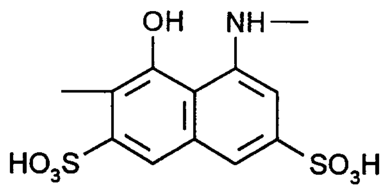

bedeuten und
Y für Chlor steht.

9. Verfahren zur Herstellung von Verbindungen gemäß Anspruch 1, dadurch gekennzeichnet, daß man ein Amin der Formel

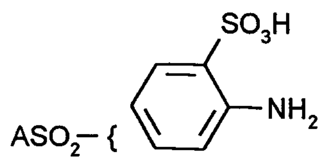 (7),

wobei
der Rest $SO_2A$ in 4- oder 5-Stellung zur Aminogruppe steht,
in wäßrigem mineralsaurem Medium diazotiert und anschließend bei einem pH-Wert von 3 - 7 mit einem Naphthalintriazinderivat der Formel

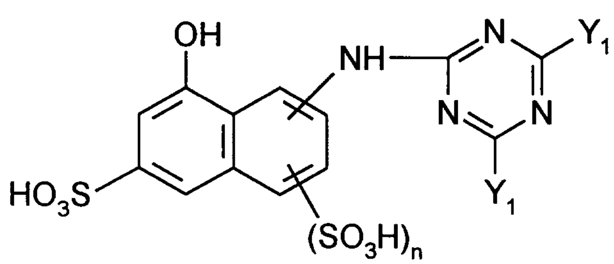 (8) ,

wobei
$Y_1$ für Chlor oder Fluor steht und

n für 0 oder 1 steht,

kuppelt, das erhaltene Zwischenprodukt der Formel

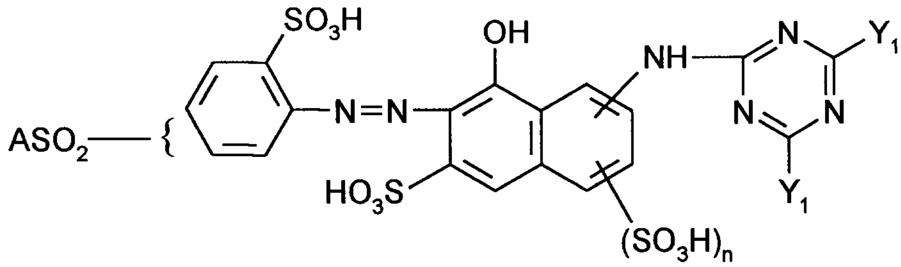

(9)

mit einer Aminonaphthalinsulfonsäure der Formel (6) bei einem pH-Wert von 3 bis 6 und einer Temperatur von 0 bis 40 ° C zu einem Produkt der Formel

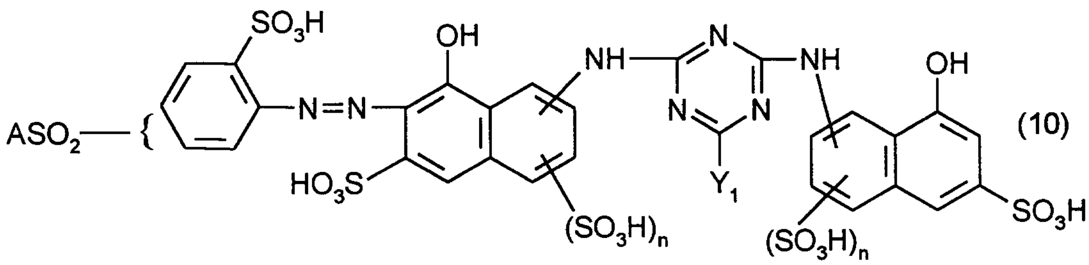

(10)

umsetzt, und

dann die Kupplung des Produktes (10) mit einer Diazokomponente der Formel (2) zu einem Farbstoff der Formel

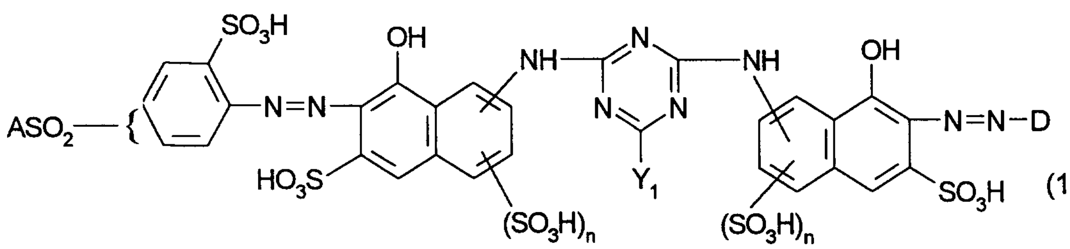

(11)

vornimmt oder indem man die Synthese des Farbstoffs (1) in umgekehrter Reihenfolge vornimmt.

**10.** Verfahren zum Färben oder Bedrucken von Hydroxyl- oder Amidgruppen enthaltenden Materialien mit einem Reaktivfarbstoff, wobei als Reaktivfarbstoff ein Farbstoff gemäß Anspruch 1 verwendet wird.

**11.** Gefärbte Materialien, insbesondere auf Basis Cellulose oder Polyamid, die mit einem Farbstoff gemäß Anspruch 1 gefärbt oder bedruckt worden sind.

Europäisches Patentamt

# EUROPÄISCHER RECHERCHENBERICHT

Nummer der Anmeldung: EP 95107602.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
|---|---|---|---|
| X | DE - A - 4 021 067 (HOECHST AG) * Ansprüche 1,2,4-8,10,11 * | 1-8, 10,11 | C 09 B 62/01<br>D 06 P 1/38 |
| A | * Anspruch 9 * | 9 | |
| D,X | EP - A - 0 511 523 (BASF AKTIENGESELLSCHAFT) * Ansprüche 1,6,7; Seite 7, Zeile 29 - Seite 8, Zeile 35 * | 1-11 | |
| D,X | DE - A - 3 629 574 (HOECHST AG) * Ansprüche 1-3,5,8,9; Seite 17, Beispiel 5 * | 1-11 | |
| D,A | DE - A - 2 748 965 (HOECHST AG) * Ansprüche; Seite 6, Zeilen 13-22; Seite 10, Zeile 7 - Seite 11, Zeile 4 * | 1-11 | |

RECHERCHIERTE SACHGEBIETE (Int. Cl.6)

C 09 B
D 06 P

Der vorliegende Recherchenbericht wurde für alle Patentansprüche erstellt.

| Recherchenort | Abschlußdatum der Recherche | Prüfer |
|---|---|---|
| WIEN | 14-09-1995 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62